# EUROPEAN PATENT APPLICATION

(11) **EP 1 879 321 A1**
(43) Date of publication of application: **16.01.2008**
(21) Application number: 06116998.3
(22) Date of filing: 11.07.2006
(51) Int. Cl.: H04L 9/08, H04L 9/32, G07F 7/02

(54) **Electronic signature with a trusted platform**

(71) Applicant: STMicroelectronics GmbH, 85630 Grasbrunn (DE)
(72) Inventor: Heins, Kersten, 85221 Dachau (DE)
(74) Representative: de Beaumont, Michel

(57) **Abstract**

The invention concerns a cryptographic module and method of setting such a module to sign data, the method comprising: creating (22) inside the module a signing identity (SID) with asymmetric key pair; generating (24) inside the module a signing asymmetric key pair (SK_{USER}, PK_{USER}); using the signing identity key (SK_{SID}) to generate inside the module a first certificate (PK_{USER}Cert) certifying the signing key; and sending (27b) said first certificate to a certification authority (7), the signing secret key (SK_{USER}) being for use in computing a signature of data with an asymmetric algorithm.

## Description

### FIELD OF THE INVENTION

The present invention relates to the field of electronic circuits and more particularly to an authentication method and system for computing a signature for data. More precisely, the present invention concerns the computation of an electronic signature associated with data.

An example of an application of the present invention is the transmission of electronic signed data using a secured electronic signature.

### BACKGROUND OF THE INVENTION

Signing an electronic document or data prior to transmission aims at providing the receiver with the possibility of authenticating the data as originating from a given person and/or as being unmodified since being sent. A signature or Message Authentication Code (MAC) is a digital value computed as a function of a key and of at least part of the data. This signature is sent to the receiver (usually, with the data). When receiving data, the receiver computes a current signature based on the received data and on a key it possesses, and compares this current signature with the signature received from the sender in order to authenticate the origin.

Electronic signature mechanisms usually implement asymmetric cryptography algorithms with a secret key for creating the signature at the sender side and a public key for signature verification at the receiver side.

Signing is different from ciphering, which aims to mask the data. The goal of a signature is integrity and not privacy, i.e. not to avoid a third party reading the data but to be sure that the data has not been corrupted since being sent by the expected sender. Of course, signing and ciphering can be combined. The public key of a sender, which allows a receiver to check the signature, is made available to the receiver in an appropriate way. Further, a certification authority might be involved in order to attest the authenticity of the sender's key. The public key is usually not sent in a ciphered form.

Today, numerous mechanisms use smartcards containing a personal key of the user as a Secure Signature Creation Device (SSCD), i.e. for generating a signature of data to be sent by an electronic device. This device is associated with a card reader and the computation is made by the chip of the card.

The multiplicity of separate elements involves additional cost, among others, for the transmissions (connectors, etc.)

### SUMMARY OF THE INVENTION

The present invention aims to at least partially address all or part of the above problems discussed in relation to the prior art.

An aspect of the present invention more specifically aims at providing a method and system for signing data avoiding the use of a smartcard.

Another aspect of the present invention aims at providing a method and system allowing the receiver to authenticate the owner of data and the device from which it originates.

The invention also aims at providing a method and system particularly suitable for Trusted Platform Modules.

To obtain all or part of these objects, and others, there is provided a method of setting a cryptographic module to sign data, the method comprising:
creating inside the module a signing identity with asymmetric key pair;
generating inside the module a signing asymmetric key pair;
using the signing identity key to generate inside the module a first certificate certifying the signing key; and
sending said first certificate to a certification authority, the signing secret key being for use in computing a signature of data with an asymmetric algorithm.

According to an embodiment of the present invention, the module is attached to an electronic device.

According to an embodiment of the present invention, the certification authority generates a second certificate to be communicated to an addressee of the signed data, said second certificate comprising the signing public key.

According to an embodiment of the present invention, the second certificate further comprises an identification of the module.

According to an embodiment of the present invention, said signing asymmetric key pair is dedicated to a user authenticated by the module.

According to an embodiment of the present invention, said first certificate is sent to the certification authority with a third certificate previously provided to the device, said third certificate certifying the signing identity key.

According to an embodiment of the present invention, said certification authority is the addressee of the data.

The present invention also provides a method for signing data with a trusted platform module, wherein the private part of said signing key is used to sign the data.

The present invention also provides a method for checking data signed according to the method of claim 8, wherein:
the second certificate is decoded to obtain the public part of the signing key; and
the signature of the data is checked by using the decoded public part of the signing key.

The present invention also provides an electronic module, preferably a trusted platform module.

### BRIEF DESCRIPTION OF THE DRAWINGS

The foregoing and other purposes, features, aspects and advantages of the invention will become apparent from the following detailed description of a number of embodiments, which is given by way of illustration only without limiting the invention, and throughout which reference is made to the accompanying drawings in which:
Figure 1 illustrates in schematic form a system according to an embodiment of the present invention;
Figure 2 illustrates in schematic form hardware elements of a system according to an embodiment of the present invention;
Figure 3 illustrates an example of an initialization sequence of a Trusted Platform Module according to an embodiment of the present invention; and
Figure 4 illustrates an example of transmission of data according to an embodiment of the present invention.

Same elements have been designated with the same numerals in the different figures. For reasons of clarity, only steps and elements which are useful for the understanding of the present invention have been shown and will be described. In particular the computation of the signature has not been detailed, the invention being compatible with any conventional algorithm of signature of data. Further, the final use of the data signed by the invention has also not been detailed, the invention also being compatible with any destination of the data and associated signature.

### DETAILED DESCRIPTION OF THE INVENTION

A feature of an aspect of the present invention is to use a Trusted Platform Module (TPM) or the like to compute the signature for data integrity.

Conventionally, such a module is a secured integrated circuit (chip) embedded in a device called a Trusted Platform (TP) and provided with computation capability for ciphering purposes.

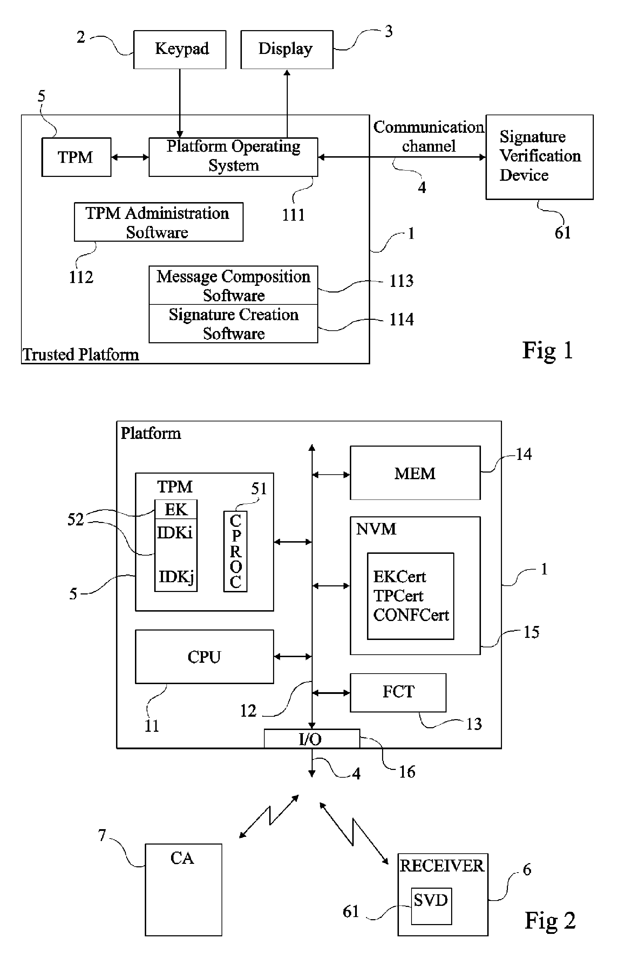

Figure 1 is a block diagram partially illustrating an embodiment of a system according to the present invention.

The system comprises a trusted platform 1 (typically an electronic device with computerized means) implementing, among others things, an operating system (bloc 111, Platform Operating System). In this example, a keyboard or keypad 2, a display 3 and a communication channel 4 are linked to the platform 1 and interfaced with the operating system 111.

The Platform 1 also comprise a trusted platform module 5 (TPM) used to perform related security tasks.

According to an aspect of the present invention, a user who want to transmit a signed data message to a receiving device (not shown in detail) comprising a signature verification device 61, selects a dedicated administration software (bloc 112, TPM Administration Software). This software interacts with the keypad 2 and the display 3. Once the platform have been initialized or set up for use as a secure signature creation device, as explained later in more detail, the user may compose or select a message (data) to be signed for transmission. For example a message is created with appropriate software (block 113, Message Composition Software). Then the user selects a Signature Creation Software (block 114) to manage the generation of a signature.

Figure 2 is a block diagram partially and schematically representing hardware elements of a platform 1 according to an embodiment of the present invention.

Platform 1 comprises at least a central processing unit 11 (CPU) communicating through buses 12 of data, addresses and controls, with functions (block 13, FCT) of the platform depending on the application. For example, the functions comprise functions of a personal digital assistant (PDA), of a mobile phone, etc. Platform 1 also comprises storage elements symbolized by a block 14 (MEM) of volatile memory (RAM, registers, etc.) and a block 15 (NVM) of non-volatile memory (ROM, EPROM, EEPROM, etc.) linked to the buses 12 and/or directly to some elements. For communication with outside platform 1 (for example with the rest of the personal digital assistant) the buses are connected to an input/output circuit 16 (I/O). The input/output circuit is connected (usually indirectly via other devices of the system) to the communication channel 4. In one application of the present invention, this channel is used for communication with the receiving device 6 (RECEIVER) equipped with the signature verification device 61 (SVD).

The trusted platform module 5 (TPM) of the platform communicates with the other elements through direct links (not shown) and/or the buses 12. The module 5 comprises at least calculation means (for example a cryptoprocessor 51, CPROC) for implementing cryptography algorithms and volatile and non-volatile storage elements among which at least a non-volatile element 52 for storing cryptographic keys.

During the production of the trusted platform module 5 (before the assembly of the trusted platform 1), an endorsement key EK is stored in the integrated circuit forming or containing the module 5. Such a key identifies the integrated circuit chip and attests its authenticity (by the manufacturer of the module). Key EK is stored in a non-volatile memory element 52 of module 5. In practice (according to the Trusted Platform standards), the endorsement key EK is a public/private key pair, the private (secret) part SK_{EK} of which is usually generated within the module 5 and never provided outside the module 5. Hence, key EK is unique to each module 5 and therefore to each platform 1 containing a module.

In a configuration phase of the trusted platform, its manufacturer or its seller (usually not the same as the manufacturer) asks a certification authority 7 (CA) also called "trusted third party" for an endorsement certificate EKCert, i.e. a certificate containing the public part (also named public key) of the endorsement key EK. Such a certificate aims at attesting that the module containing the key EK is genuine, i.e. that private part SK_{EK} (also named secret part, secret key or private key) of the key can be considered as protected. EKCert is being signed by SK_{EK}. Further, the manufacturer of the platform asks a certification authority (which may or may not be the same as the former one) for a platform certificate TPCert. The certificate TPCert is being signed by the private part SK_{TP} (secret key) of a key pair (SK_{TP}, SK_{TP}) of the trusted platform manufacturer (or a selected certification authority on behalf of the manufacturer). Such a certificate aims as attesting that the platform is genuine and contains the module having key EK. A third certificate called a conformance certificate CONFCert is usually provided by a party different from the above to attest as to the security properties of the platform. The certificate CONFCert is being signed by the private part SK_{CONF} (secret key) of a key pair (SK_{CONF}, SK_{CONF}) of the conformance party.

All endorsement, platform and conformance certificates are linked to the module 52, which contains the endorsement key pair EK. Further, these certificates contain public keys PK_{EK}, PK_{TP} and PK_{CONF} of the entities (manufacturer, seller, CA, etc.) who signed certificates EKCert, TPCert, respectively CONFCert. These public keys are known by the appropriate certification authority or authorities. All the certificates might be stored in the platform 1, for example in non-volatile memory 15, or is made available to involved third parties in an appropriate way (for example, located in a central database on a server).

Several identities IDK1 to IDKj are usually provided in any trusted platform module, as the original endorsement key is not allowed to be directly used during the life of the product. An identity is an asymmetric key pair (for example, an RSA key pair) generated internally by the module 5. These keys can be derived directly or indirectly from the endorsement key EK of the module. Creation of an identity can be performed during the life of the product by activating a specific function of the module 5. The identities are stored in a non-volatile manner (bloc 52) in the module 5 and, as for the endorsement key EK, their private part is never provided outside from the module.

An owner of a platform usually has to take ownership of the platform in order to become registered as such. Such a "taking of ownership" is a specific function that has to be made before the module can perform useful operations. The owner can however be modified by performing specific operations.

The above configuration steps can correspond or be adapted to any conventional way of firstly obtaining the endorsement key and secondly obtaining manufacturer or manufacturers certificates and conformance certificates.

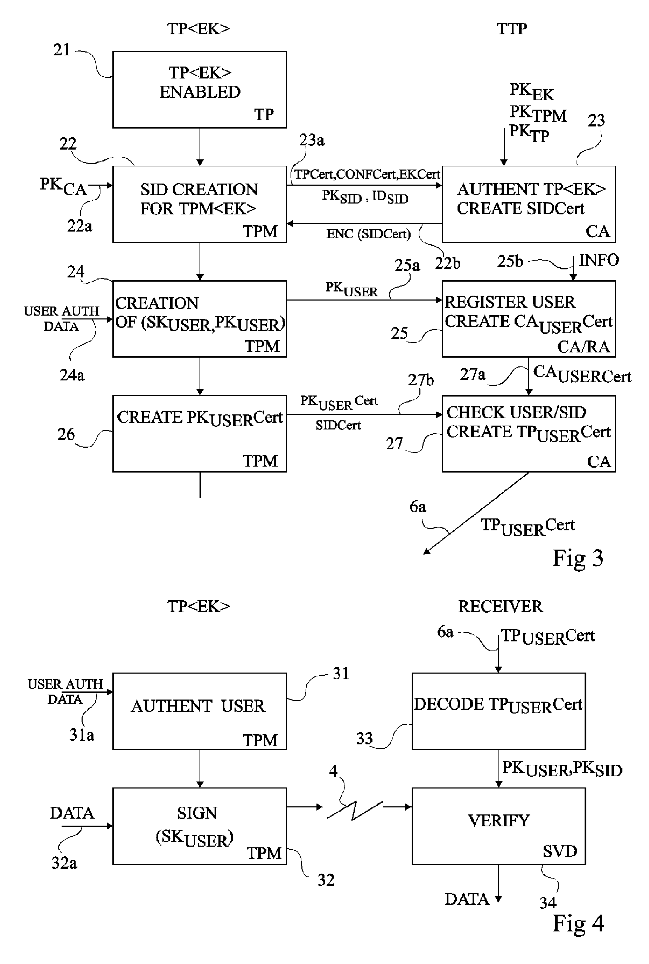

Figure 3 is a block diagram of an embodiment of an initialization process of a trusted platform according to the present invention. Such a process is defined by a part of the TPM administration software (112, Figure 1). The left part of the figure illustrates the steps performed at the Platform side (in the platform and/or the module). The right part illustrates the steps performed at a trusted third party (TTP) side.

According to the exemplary embodiment of Figure 3, for a specific platform TP<EK> containing a module TPM<EK> having an endorsement key EK, conformance certificate and manufacturer or manufacturers certificates have already been issued by appropriate authority or authorities as indicated above. The module and the platform can then be considered as genuine and complying with security specifications. The public keys PK_{EK} PK_{TP} and PK_{CONF} (required for verification of the certificate contents) are known by appropriate third parties (especially certification authorities). Such public keys are usually shared by a group of modules having different generated private keys. Further, an owner "takes ownership" of the module and platform. Hence, the platform TP<EK> is considered as "enabled" (block 21).

The owner initializes (block 22) the creation of a new identity SID for signature purposes for the module TPM<EK>.

The owner (optionally a user as it will be seen later) selects the appropriate trusted third party (certification authority CA) in order to obtain a certificate for the new identity. Such a selection can be made by selecting, or introducing (arrow 22a), or by identification of the public key PK_{CA} of the certification authority CA. The platform sends (arrow 23a) its certificates EKCert, TPCert and CONFCert to the authority and also the public key PK_{SID} of the identity generated by its module 5, with identification ID_{SID} of this identity. The communication between the certification authority and the trusted platform uses any support (wired and/or wireless) and is not necessary ciphered.

The selected certification authority CA authenticates (block 23) the module and the platform by using (arrow 23b) their public keys PK_{EK}, PK_{TP} and PK_{CONF} to check the contents of the certificates EKCert, TPCert and CONFCert. If the authentication is correct, the authority generates a new certificate SIDCert for the identity SID, i.e. with the public key PK_{SID}. If not, any appropriate error processing is performed.

This certificate is sent (arrow 22b) back to the platform, in encrypted form ENC(SIDCert) with the public part of the module's endorsement key EK. Hence, only the corresponding module (and platform) which possesses the appropriate private key can decrypt the message and obtain a usable certificate.

A user who wants to use the signature capability provided by the invention creates (block 24) a personal signature key pair (SK_{USER}, PK_{USER}). At the same time, authentication data (for example, a digital code) for access control to SK_{USER} is specified (arrow 24a, USER AUTH DATA). Tolls for generation of asymmetric keys are available in any trusted platform module. The key SK_{USER} is preferably generated as "non-migratable" (option available in trusted platform module) so that it remains in the module 5. If the user is different from the owner, the owner can disclose specified USER AUTH DATA to the user allowing the module to authenticate the user and grant access to SK_{USER} (for use during signing process, see Fig. 4). Either the authorization for creation of the key pair (SK_{USER}, PK_{USER}) is given to the user by the owner, or the ownership of the SK_{USER} is transferred by the owner to the user after this creation.

The public key PK_{USER} of the user is transferred (arrow 25a), not necessarily in encrypted form, to a registration authority RA associated to the certification authority CA.

The user identifies himself/herself at the registration authority (block 25) which associates the PK_{USER} key with personal information INFO of the user. This personal information is provided to the registration authority via another route (arrow 25b), for example through a corporate human resources department who already knows the user's identity. Such a step can be considered as a registration step of the user and may involve different steps provided that the registration authority can then identify the user as the exclusive owner of SK_{USER} and associate the user with the certification authority CA having certified the identity SID. The certification authority CA generates a certificate CA_{USER}Cert including the public key PK_{USER} (arrow 27a) and - depending on the use case - additional user information (e.g. name, age, address).

The module 5 is also able to certify keys. This capability is used (block 26) with the identity secret key SK_{SID} to certify the public key PK_{USER} as a protected signature key or "non-migratable" key, i.e. a key not valid if transferred to another device. The certificate PK_{USER}Cert generated by the module for the public key PK_{USER} is transferred to the certification authority CA together with the decrypted certificate SIDCert for the identity key PK_{SID} issued by the certification authority at block 23. Only the unique module 5 was able, between steps 22 and 24, to decrypt the certificate for the identity SID.

The certification authority can then use (block 27) the key PK_{USER} received from the registration authority to verify that the public key PK_{USER} belongs to the same platform as the public key PK_{SID}. The authority CA knows that the pair (SK_{USER}, PK_{USER}) has been generated inside the module TPM<EK> and that the secret key SK_{USER} will not leave the module. Hence, the certification authority can assert this by generating a certificate TP_{USER}Cert corresponding to a couple user/platform. This certificate contains the user's public key PK_{USER} and information about the platform identity (for example, the public part PK_{SID} of the identity key that the receiver already possesses via another means).

The certificate TP_{USER}Cert is transmitted (arrow 6a) to the receiver 6, which is able to verify it (with the CA's public key) to obtain user's public key and corresponding platform identity information or keys.

An advantage of the embodiment of Figure 3 is that certificates, issued by trusted entities so that the identity of the module is verified by the certification authority, are used at the same time for approving conformance with other system requirements.

Figure 4 is a block diagram illustrating very schematically an exemplary embodiment of a signing process according to the present invention. The left part of the figure illustrates the steps performed at the Platform side (in the module). The right part illustrates the steps performed at the receiver side.

The platform is assumed to have been configured or set up for implementing a signature process (for example as disclosed above in connection with Figure 3).

In a first step (block 31) the module authenticates the user asking for the signature creation. Such an authentication requires the user to provide (arrow 31a) his or her authentication data USER AUTH DATA.

If the user is authenticated, the message DATA provided to or composed by the platform with the composition software (113, Figure 1) is signed (block 32) by the signature creation software (114, Figure 1) using the user's secret key SK_{USER} contained inside the module 5. The data can be provided (arrow 32a) from any part of the equipment associated with the platform 1 or function 13 of the platform 1.

The signed data is sent (ciphered or otherwise) via the communication channel 4 to one or more addressees (receivers).

The receiver has received separately (arrow 6a) from the certification authority the platform/user certificate TP_{USER}Cert. The receiver uses (block 33) this certificate to obtain and verify the public key PK_{USER}, maybe additional user information and an identification of the platform (for example, the public key PK_{SID}).

The receiver uses (block 34) the key PK_{USER} to decrypt the signature of the received data. If the decrypted signature matches a current signature (hash value) computed by the receiver for the received message, the receiver can trust the data as sent by the user, signed by the platform TP<EK> and not corrupted since being sent. If the sender is not the correct one or if the message has been corrupted, the computation of the hash value of the received message will be different from the decrypted signature.

As the certificate TP_{USER}Cert is only issued once the certificate SIDCert has been checked on the certification authority side, the certificate TP_{USER}Cert might be provided to the receiver without the public key PK_{SID}. However, knowing the key PK_{SID} can be used by the receiver for additional purposes. For example, a receiver obtaining the key PK_{SID} (from the certificate TP_{USER}Cert) is then able to encrypt data (with PK_{SID}) to be sent back to the sender. These data (for example a license file) will be usable only by the corresponding platform.

According to combinable alternatives:
The certification authority (27) is the receiver of the signed data (or vice versa: the receiver plays the role of a CA);
The signature key is a temporary key derived from the user key (SK_{USER}, PK_{USER});
The authentication of the user on the platform side (bloc 31, Figure 4) includes authentication/identification processes depending on the application (password, biometric identification, etc.);
The trusted platform module uses a chip individual identify key to certify the user signature key PK_{USER};
The key EK is directly used to generate PK_{USER}Cert and correspond to the signing identity key SID, certificate SIDCert then corresponding to certificate EKCert (alternative according which the cryptographic module is not a TPM as, in a TPM, the key EK can not been used directly to generate PK_{USER}Cert);
The certification authority obtains the public portion PK_{SID} of the module identity key in another secure way, for example hand-carried by courier;
The recipient of the signed message knows the identity of the sender of the message (the certification authority does not need to cooperate with a registration authority for identification of the platform user);
The signing public key is transmitted to the receiver without intervention of a centralized certification authority but through a process PGP (Pretty Good Privacy) according which any third party trusted by the receiver can become a certification authority;

An advantage of the present invention is that a trusted platform module can be used for signing purposes without the need of a smartcard.

The invention is particularly advantageous in a device such as a trusted platform containing a non-removable module (especially Trusted Platform Module) with cryptographic ability that is used to create an electronic signature on behalf of a user of the device. It allows an external entity (receiver) to verify that the personal signature key used is locked to the corresponding unique identity of the device. This additional information might be useful because the receiver knows that the user's signature is irremovably associated to a specific platform. For example, the receiver can authenticate a user request and return dedicated data to the user's platform which will be usable only with this specific platform.

In such devices, like PDAs, mobile pens, watches, pens, etc., it is acceptable to assume that the device is a personal device not shared with other users. Hence, it is possible to use a non-removable module to form the secure signature creation device.

Having thus described at least one illustrative embodiment of the invention, various alterations, modifications and improvements will readily occur to those skilled in the art. Such alterations, modifications and improvements are intended to be within the scope of the invention. Accordingly, the foregoing description is by way of example only and is not intended to be limiting. Further, the practical hardware and/or software implementation of the present invention is in the ability of one with an ordinary skill in the art from the above functional description, especially the integration of the invention in a processing unit. Furthermore, the choice of the signing algorithm is free and the choice of the content and transmission of the certificate can be modified depending on the application and the processes used. The invention is limited only as defined in the following claims and the equivalent thereto.

## Claims

1. A method of setting a cryptographic module (5) to sign data, the method comprising:
creating (22) inside the module a signing identity (SID) with asymmetric key pair;
generating (24) inside the module a signing asymmetric key pair (SK_{USER}, PK_{USER});
using the signing identity key (SK_{SID}) to generate inside the module a first certificate (PK_{USER}Cert) certifying the signing key; and
sending (27b) said first certificate to a certification authority (7), the signing secret key (SK_{USER}) being for use in computing a signature of data with an asymmetric algorithm.

2. The method of claim 1, wherein the module is attached to an electronic device.

3. The method of any one of claims 1 to 2, wherein the certification authority (7) generates (27) a second certificate (TP_{USER}Cert) to be communicated to an addressee (6) of the signed data, said second certificate comprising the signing public key (PK_{USER}).

4. The method of claim 3, wherein the second certificate (TP_{USER}Cert) further comprises an identification (PK_{SID}) of the module (5).

5. The method of any of claims 1 to 4, wherein said signing asymmetric key pair (SK_{USER,} PK_{USER}) is dedicated to a user authenticated (31) by the module (5).

6. The method of any of claims 1 to 5, wherein said first certificate (PK_{USER}Cert) is sent to the certification authority (7) with a third certificate (SIDCert) previously provided to the device, said third certificate certifying the signing identity key (PK_{SID}).

7. The method of any of claims 1 to 6, wherein said certification authority is the addressee (6) of the data.

8. A method for signing data with a trusted platform module (5) set up according to any of claims 1 to 7, wherein the private part (SK_{USER}) of said signing key is used to sign the data.

9. A method for checking data signed according to the method of claim 8, wherein:
the second certificate (TP_{USER}Cert) is decoded to obtain the public part (PK_{USER}) of the signing key; and
the signature of the data is checked by using the decoded public part of the signing key.

10. An electronic module, preferably a trusted platform module (5), comprising means for implementing a method according to anyone of claims 1 to 8.
